(19) Europäisches Patentamt / European Patent Office / Office européen des brevets

(11) **EP 3 380 902 B1**

(12) **EUROPEAN PATENT SPECIFICATION**

(45) Date of publication and mention
of the grant of the patent:
**08.01.2020 Bulletin 2020/02**

(51) Int Cl.:
*G05B 19/423* $^{(2006.01)}$     *G05B 19/427* $^{(2006.01)}$
*G05B 19/414* $^{(2006.01)}$     *G05B 19/421* $^{(2006.01)}$

(21) Application number: **16805966.5**

(86) International application number:
**PCT/DK2016/050392**

(22) Date of filing: **23.11.2016**

(87) International publication number:
**WO 2017/088889 (01.06.2017 Gazette 2017/22)**

(54) **ROBOT TRAJECTORY LEARNING BY DEMONSTRATION WITH PROBE SENSOR**

ROBOTERBAHN ODER ERLERNEN DER BAHN DURCH DEMONSTRATION

APPRENTISSAGE DE PARCOURS OU TRAJECTOIRE DE ROBOT PAR DÉMONSTRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.11.2015 EP 15196074**

(43) Date of publication of application:
**03.10.2018 Bulletin 2018/40**

(73) Proprietor: **Science Ventures Denmark A/S
5230 Odense M (DK)**

(72) Inventor: **CORTSEN, Jens
5792 Årslev (DK)**

(74) Representative: **Plougmann Vingtoft a/s
Strandvejen 70
2900 Hellerup (DK)**

(56) References cited:
**US-B1- 6 285 920     US-B1- 6 385 508**

**Description**

FIELD OF THE INVENTION

The present invention relates to the field of robots, especially to a method and system for trajectory or path learning of a robot by human demonstration, e.g. for learning of a welding operation by human demonstration. More specifically, the invention provides a robot learning system and a method for controlling a robot involving a probe sensor to be mounted on the robot during a learning session.

BACKGROUND OF THE INVENTION

Robots are suited for repeating tasks with a high precision. Thus, robots are suited for performing working processes, e.g. welding, laser cutting, spraying etc., where the same sequence of motion for following a trajectory or path must be precisely for each object to be processed. I.e. performing a sequence of leading a process tool through the same trajectory, both with respect to position in space of the tip of the process tool, and with respect to orientation of the process tool.

Different methods exist for trajectory learning of robots. Some methods are based on programming, whereas other methods are based on a human user guiding the robot through the trajectory. Such methods are suited for robot learning in case of robots which are supposed to carry out simple tasks without high demands on precision of the trajectory to be followed. Thus, human demonstration methods are often complicated for high precision tasks, such as following a complicated shape of an object, e.g. for welding a traced. For such tasks, it is often necessary to move the robot in small steps to ensure for each step that the process tool tip is in the right position, and that the orientation of the process tool is also correct for the process to be performed.

Thus, such sequence of manually recording single steps, until the complete trajectory has been followed, is complicated and very time consuming, especially in case of complicated shapes to be followed. Further, since the trajectory has been recorded in single steps, there may be problems in the translation into a continuous sequence to be carried out by the robot, due to its limitations with respect to maximum speed and accelerations etc. This has to be done by off-line processing.

US 6,212,443 describes a robot learning system with one single combined position and orientation controller in the form of a handle which is operated by the user's one hand. This handle is fixed to a force sensor which senses the operator's movements and controls the robot accordingly, thereby allowing the user to control position and orientation of a welding torch positioned on the tool center point of the robot. The user holds in her/his other hand a teaching apparatus which has a servo power switch to be hold down by the user, due to safety reason.

DE 20 2008 014481 U1 describes a robot controller with a control device separate from the robot, wherein the control device has two joysticks for controlling position of a robot arm.

EP 2 342 608 describes a method for programming an industrial robot. The industrial robot is moved manually in particular along a space curve. A distance between the industrial robot and an object is determined, and the drives of the industrial robot are controlled such that the industrial robot can be moved manually only at a maximum speed, which is dependent on the distance determined from the object.

WO 2015/090324 A1 describes a system for switching between control points of a robotic system involving an industrial robot including a robot arm with a number of joints and provided with a tool interest point movable in a plurality of degrees of freedom.

SUMMARY OF THE INVENTION

Thus, according to the above description, it is an object of the present invention to provide an efficient robot learning system and method which allows fast robot learning of complicated shaped trajectories.

The features of the method and system according to the present invention are defined in the independent claims, and the preferable features according to the present invention are defined in the dependent claims.

In a first aspect, the invention provides a robot learning system for trajectory learning of an associated robot comprising a robot arm between a base and a tool center point, by demonstration from a user, according to the appended claims. Such robot learning system is advantageous, since the probe sensor can assists the user in controlling movement of the robot for following a desired trajectory. The probe sensor serves as a dummy tool in the real-time learning session, where controlling of the tool center point (TCP) of the robot becomes easier, if the probe tip can measure distance and orientation relative to a complex shaped surface of an object be followed. Especially, it has been found that the system is suited for the user to demonstrate complex shaped trajectories to the robot in a continuous manner, where not only position in space, but also orientation of the robot during the trajectory tracking is important, e.g. for teaching a welding operation to the robot.

Thus, data can be logged in a continuous manner during the user operating the robot, and this provides an easy trajectory learning by demonstration, even in case of complex trajectories or paths to be tracked which can be followed at a reasonable pace by the user without interruptions. Especially, the probe may have a tip arranged to continuously touch the surface of the object forming the trajectory to be followed, and preferably the probe sensor tip is resiliently or displaceably mounted in relation to the TCP, such that the tip can be forced in continuous contact with the surface of the object forming the trajectory to be followed. Hereby, the user can control the robot in a less precisely manner, and still obtain that the probe sensor tip can be maintained in contact with the object surface throughout the real-time learning session. With the relevant distance and orientation data from the probe sensor continuously provided to the robot controller during the real-time learning session the necessary information is provided about the position of the probe sensor tip and the TCP during the learning, that the robot controller can calculate position and orientation of the TCP to be followed, in case a tool with a known shape and length is used on the TCP. Especially, the robot controller can use distance and orientation data from the probe sensor as feedback to continuously adjust movement of the TCP of the robot with the purpose of seeking to maintain a neutral or center position of the probe sensor irrespective of control input from the user via the user interface. This can help the user in controlling the robot even in case of complex trajectories without forcing the probe sensor into extreme positions.

E.g. the distance and orientation data from the probe sensor may be continuously logged during the real-time learning session, or the data from the probe sensor may be used only to continuously adjust TCP position in space and orientation during the real-time learning session, and these adjusted data can then be then logged and stored.

In the following, preferred features and embodiments of the invention will be described.

The probe sensor may comprise a longitudinally displaceable rod connected to the tip at one end and connected to a base of the probe sensor at the opposite end, so as to allow sensing of a distance between the base of the probe sensor and the tip by means of a distance sensor, such as a distance sensor comprising a linear potentiometer. E.g. the probe sensor may comprise a spring loaded rod arranged to be compressed, and it is preferably arranged with the distance sensor arranged to sense a parameter indicative of its length or distance between the tip of the rod and the TCP or at least the base of the probe sensor arranged for mounting on the TCP. This allows the task of controlling motion sequence of the robot to follow a trajectory to be easier, since the position precision is relaxed, as the tip of the rod to follow the trajectory is flexibly arranged in relation to the TCP. Hereby, especially a trace, e.g. a welding trace, can very easily followed by the tip of the rod, without the user having to maintain a precise distance between tip and TCP, as would otherwise be required in case of a tool with a fixed length mounted on the TCP. Especially, the longitudinally displaceable rod and the base of the probe sensor may be connected at a joint, so as to allow multidirectional movement of the longitudinally displaceable rod in relation to the base of the probe sensor, wherein a first angle sensor, such as a potentiometer, is arranged to sense an angle between the base of the probe sensor and the displaceable rod. More specifically, the first angle sensor may be arranged to sense an angle in a first direction between the base of the probe sensor and the longitudinally displaceable rod, and wherein a second angle sensor, such as a potentiometer, is arranged to sense an angle in a second direction between the base of the probe sensor and the longitudinally displaceable rod, wherein said first and second directions are different, such as said first and second directions being perpendicular. With such joint connection between base of the probe sensor and the longitudinally displaceable rod, a freedom of orientation of the TCP is possible without the probe sensor tip is forced out of contact with a surface to be followed. This allows the user to control orientation of the TCP of the robot with less precision.

Preferably, the probe sensor has a neutral or center position of its tip relative to its base, and especially, the tip of the probe sensor may be resiliently connected to its base, so that that the tip will return to the neutral or center position after being forced away from the neutral or center position. Such probe sensor embodiments can help to assist the user in controlling the robot to follow the trajectory, since the precision demand is relaxed, because the probe tip and TCP are allowed to move in relation to each other, within a certain limit, without forcing the probe tip out of contact with the surface to follow. Therefore, the user can control the robot movements during the real-time learning session in a less precise manner, thereby facilitating the real-time learning task.

The tip of the probe sensor may have a spherical shape, e.g. in the form of a small metal ball, so as to allow tracking of a rather narrow trajectory formed by two or more coinciding surfaces.

The processor or robot controller is preferably programmed to continuously calculate a transformation of the robot coordinates in response to data representing said signal or data from the probe sensor during the real-time learning session. Especially, the processor or robot controller may be programmed to control the robot in response to a combination of input from the user interface and data representing the signal from the probe sensor, during the real-time learning session. More specifically, the robot controller may be programmed to move, such as continuously move, the robot in response to feedback from the probe sensor, during the real-time learning session, so as to minimize a deviation between an actual position of the tip of the probe sensor and a neutral or center position of the tip of the probe sensor. Preferably, the robot controller is programmed to continuously move the robot so as to help the user in continuously controlling the robot to ensure that the tip of the probe sensor is in contact with a surface of an object to be followed. Hereby, the robot controller will assist the user in continuously obtaining the probe sensor in its neutral or center position during the real-time learning session, thereby facilitating the trajectory following task.

The user interface may comprise several control elements and be designed in various ways. In some specific embodiment, the user interface comprises a first control element comprising a first joystick arranged for operation by the user's one hand for control of position in space of the tool center point of the robot, and comprising a second control element element comprising a second joystick for tilting or rotating the tool center point of the robot, wherein the second joystick is arranged for simultaneous operation by the user's second hand. Specifically, the first joystick may be positioned at or near the tool center point of the robot, and the second joystick may be positioned at another position on the robot. Such user interface using joysticks for both position and orientation control provides an intuitive control of the robot. The position control joystick is preferably mounted at or near the TCP of the robot in combination with the orientation joystick being mounted on the robot arm, at a distance from the position joystick for comfortable operation, e.g. a distance comparable with the width of the user's shoulder or within the range of the user's shoulder width +/- 30 cm. In such embodiment, the user has intuitive control of both position and orientation of the TCP, and thus the task of demonstrating a desired trajectory in real-time becomes a rather easy task for the user.

The processor or robot controller is preferably arranged to control the robot in response to the data logged during the learning session, and wherein the processor is programmed to calculate a transformation of the robot coordinates in response to an input regarding physical properties, such as length, of a tool to be mounted on the tool center point during control of the robot in response to the data logged during the learning session, and further in response to known properties of the probe sensor.

In general, the data to be logged, i.e. stored for later use, may be the direct user interface, or a processed signal from the robot controller. The signal(s) from the probe sensor may be logged directly or not.

Even though the user is close to the robot, safety features can be easily incorporated to stop motion of the robot when the user does not touch both control elements simultaneously, and using joysticks, the joysticks are preferably supplied with springs to enter a neutral position to when not being actively operated by the user. Alternatively, e.g. for control of smaller robots, the first and second control elements can advantageously be mounted on the robot so as to provide an intuitive control during the learning process. For control of large robots, a separate control console with the two control elements, e.g. joysticks, mounted thereon may be preferred.

It is to be understood that other available and known user interface control elements may be used instead of joysticks as first and second control elements, e.g. push knobs, dial elements, or a combination of these etc.

The processor of the system may be implemented in various ways, as known by the skilled person. E.g. it may form part of the controller of the robot, or it may form part of a computer system separate from the controller of the robot, such as a laptop computer with a suitable software. In the same way, the logged data may be stored or recorded in the memory contained within the controller of the robot, and/or on a separate computer or data storage system being in a wireless of wired connection with the user interface and/or the controller of the robot so as to log and store the sampled data for later use.

The system preferably comprises a safety system in order to protect the user from injuries during the learning session, especially in cases where the user is within the reach of the robot arm during the learning session. Such safety system may be arranged to cause the controller of the robot to stop movement of the robot during a learning session, unless the safety system senses that the user touches both of the first and second control elements. Especially, the safety system may comprise a sensor positioned on each of the first and second control elements for sensing contact with the user's hand, such as a sensor comprising a push button, such as a sensor arranged to sense electrical contact to the user's hand.

It is be understood that the robot may be a robot based on any known robot actuator technology arranged for position in order to follow a trajectory or path in space. The robot arm may have two, three, four, five or more joint arm elements between the base and the TCP. Some existing robots allow for logging of control data from its controller during an operation sequence of the robot, which can be used in a system according to the first aspect, e.g. for logging on a general purpose computer. The 'controller of the robot' is to be understood as the processing means which generates the (electrical) control signals to be applied to the various actuators of the robot for controlling the motion of the robot.

The skilled person will know how to program the controller of the robot to provide a desired translation of the signals from the user interface, i.e. control element(s) (e.g. joystick), so as to have a suitable translation between movements of the control element (e.g. joystick) and robot movement. Especially, it may be preferred that the position and orientation of the TCP is controlled such that a tip of the sensor probe mounted on the TCP is in contact with an object to follow, can be controlled independently with respect to position and orientation by the first and second control elements, respectively. This may facilitate the trajectory following task further for the user, during the learning session. The skilled person will known how to provide a suitable spatial resolution from the probe sensor, and how to sample the signal(s) from the probe sensor to provide suitable input data to the robot controller.

It is to be understood that the system according to the first aspect can be provided as a stand alone system to be mounted on existing robot and robot controllers. However, the system may as well be integrated robot and robot controller systems.

In a second aspect, the invention provides a robot system comprising

- a robot learning system according to the first aspect,
- a robot comprising a robot arm with a plurality of moveable arm elements arranged between a base and a tool center point, wherein the tool center point is arranged for mounting of a tool, such as a welding tool, and
- a robot controller arranged to control movement of the robot.

Especially, the robot may be arranged to be controlled in response to the data logged during the learning session, and to perform a welding process accordingly, such as the robot being a dedicated welding robot.

Apart from a robot for welding, the robot may be arranged for e.g. cutting, spraying, painting, milling, drawing, grinding, glueing, grouting, sealing and chamfering. Further, the invention may also be suitable for robot learning of pick and place robots, where the robot learning can be used to demonstrate the continuous trajectory motion sequence involved in a pick and placed routine.

In a third aspect, the invention provides a method for controlling a robot during trajectory learning of the robot by demonstration from a user to make the robot follow a desired trajectory during a real-time learning sesssion, according to the appended claims.

In a fourth aspect, the invention provides a computer program product having instructions which, when executed, cause a computing device or system comprising a processor to perform the method according to the third aspect. Especially, the computer program product may be one of: a part of a robot controller software product, and a stand-alone software product for a general computer. It is to be understood that the computer program product instructions in the form of program code which may be implemented on any processing platform, e.g. a robot controller, a general processor in a computer device, e.g. in the form of a downloadable application for a programmable device.

In a fifth aspect, the invention provides a computer readable medium having stored thereon a computer program product according to the fourth aspect.

It is appreciated that the same advantages and embodiments described for the first aspect apply as well for the second, third, fourth, and fifth aspects. Further, it is appreciated that the described embodiments can be intermixed in any way between all the mentioned aspects.

## BRIEF DESCRIPTION OF THE FIGURES

The invention will now be described in more detail with regard to the accompanying figures of which

Figs. 1a and 1b illustrate an overview of a system embodiment during a learning session (1a), and in an execution session (1b) where the robot performs a prerecorded task,

Figs. 2a and 2b illustrate the concept of independently controlling orientation or rotation (2a) and position (2b) of the robot with two joysticks,

Fig. 3 illustrates movements of a three-axis joystick, as an example of a control element,

Fig. 4 illustrates an example of a 3D probe sensor for placing at the TCP during the learning session,

Fig. 5 illustrates an example of a flow chart for a robot control loop state diagram during learning (to the left), and during execution (to the right),

Figs. 6a, 6b, and 6c show photos of an implementation with two three-axis joysticks mounted on a six axes CRS A465 robot, and Figs. 6a and 6c further show a probe sensor mounted on the TCP of the robot,

Fig. 7 illustrates steps of a method embodiment,

Fig. 8 illustrates preferred processing of sensor data from the probe sensor,

Fig. 9 illustrates a preferred algorithm for providing position feedback from the probe sensor for controlling the robot, and

Fig. 10 illustrates a photo of a probe sensor embodiment with a ball shaped tip and a protective bellow.

The figures illustrate specific ways of implementing the present invention and are not to be construed as being limiting to other possible embodiments falling within the scope of the attached claim set.

## DETAILED DESCRIPTION OF THE INVENTION

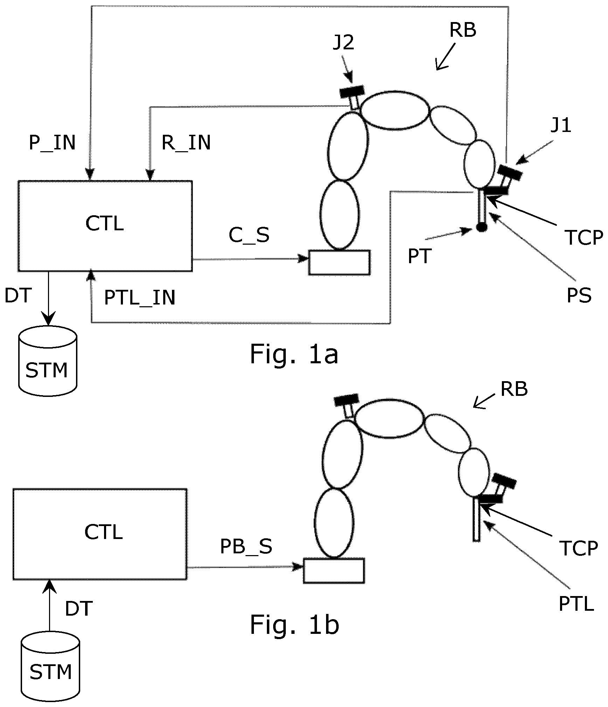

Fig. 1a shows basic parts of a robot learning system system embodiment during a real-time trajectory learning session, while Fig. 1b shows the same robot RB in an execution process, e.g. a welding process, based on data DT logged during the learning session.

The robot RB has in the example an arm formed by 5 joint arm elements between a base and a tool center point TCP. A controller of the robot CTL serves to control actuators for moving the arm elements. A probe sensor PS with a probe tip PT is mounted on the TCP of the robot RB, so as to continuously sense distance and orientation between the probe tip PT and the TCP during the real-time trajectory learning session. This allows contact with the probe tip during the trajectory following on an object, e.g. a welding trace. A signal PTL_IN is generated by the probe sensor in response to the sensed distance and orientation.

The user interface comprises two three-axis joysticks J1, J2 both mounted on the robot arm, namely on the TPC, and on an elbow between two arm elements, a suitable distance (e.g. 30-80 cm) away from each other to allow the user to comfortably operate both joysticks J1, J2 simultaneously. A specific example of a low cost joystick is Apem 3140SAL600, which is based on Hall effect sensing technology.

In Fig. 1a, a human user (not shown) operates the two joysticks J1, J2 simultaneously, by respective hands, to cause the robot RB to move the position and orientation of its TCP so that the probe tip PT follows contact with a desired trajectory on an object. The splitting of the position and orientation tasks between the user's respective hands provides, especially in combination with the mounting points on the robot, provides an intuitive user interface. Preferably, the probe sensor PS is arranged such that the probe tip PT is in flexible connection with the TCP, thus allowing even easier following of a complicated shaped trajectory. The joystick J1 at the TCP controls position of the TCP, thus also position of the probe tip PT, while the other joystick J2 at the elbow controls orientation, i.e. rotation of the TCP, and thus also orientation or tilting of the probe sensor PS. This allows the user with an intuitive control of the robot movements during following of e.g. a welding trace in real-time. The two joysticks J1, J2 are arranged to generate respective electrical input signals P_IN, R_IN to a controller CTL of the robot RB, which generates control signals C_S to control actuators in robot RB accordingly. Further, an electrical signal PTL_IN from the probe sensor PS is also applied to the controller CTL of the robot with the purpose of logging data indicative of at least a distance between the probe tip PT and the TCP.

In the shown embodiment in Figs. 1a and 1b, signals P_IN, R_IN, PTL_IN from the joysticks J1, J2 and the probe sensor PS are applied to the processor in the controller CTL of the robot RB, while control data DT are stored for later use, i.e. an indirect way of storing the signals P_IN, R_IN, PTL_IN from the joysticks J1, J2 and the probe sensor PS. However, these signals P_IN, R_IN, PTL_IN may alternatively be directly logged by a separate processor, e.g. a laptop computer. However, in both cases, the purpose is to sample the signals P_IN, R_IN, PTL_IN with a suitable time and magnitude resolution, and to preferably store such data DT in a digital format at a storage medium STM for later use, so as to allow later control of the robot RB in response to the data DT logged during the learning session.

In Fig. 1b, data DT stored on a storage medium STM during the real-time trajectory learning are played back to the controller CTL of the robot RB which now has a process tool PTL mounted on its TCP. The joysticks and now not in use, since the robot RB is now controlled by the stored data DT so as to cause the process tool PTL to follow the learned trajectory with respect to both position in space and orientation, i.e. tilting.

In the system, key elements are two three axes joysticks J1, J2 mounted in this example on a six axes industrial robot body, and a preferably three axes probe sensor PS. In the shown example the position controlling joystick J1 is mounted near to the 6'th joint of the robot, i.e. near the TCP. The orientation controlling joystick J2 is mounted near to the robot elbow, or at distance of human shoulder width, e.g. around 45-80 centimeters, in case of a large industrial robot. The three axes probe sensor PS is mounted on the TCP.

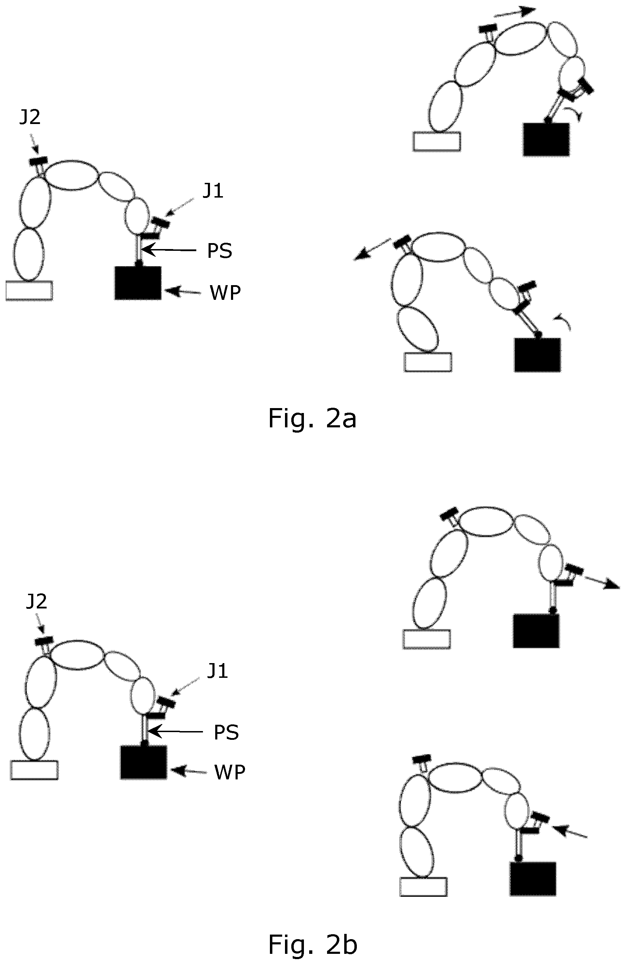

Figs. 2a and 2b show the intuitive learning method by means of the two joysticks J1, J2 mounted on the robot as in Figs. 1a, 1b, i.e. the relation between the joystick J1, J2 axes and the robot Cartesian axes are shown. The probe sensor tip is shown in contact with the surface of a work piece WP.

In the three sketches of Fig. 2a the orientation controlling by means of joystick J2 is illustrated, where the arrows on the sketches to the right indicate the preferred effect of movement of the orientation joystick J2 and its orientation effect on the robot, where the x and y movable axes of the joystick J2 controls the x or y rotation of the TCP. By rotating the joystick J2 handle the z axis rotation can be controlled by the user.

In Fig. 2b, the arrows on the sketches to the right indicate the preferred effect of movement of the position joystick J1 and its position effect on the robot TCP, where the x and y movable axes of the joystick J1 controls the x or y position of the TCP. By rotating the joystick J1 handle the z axis position can be controlled by the user.

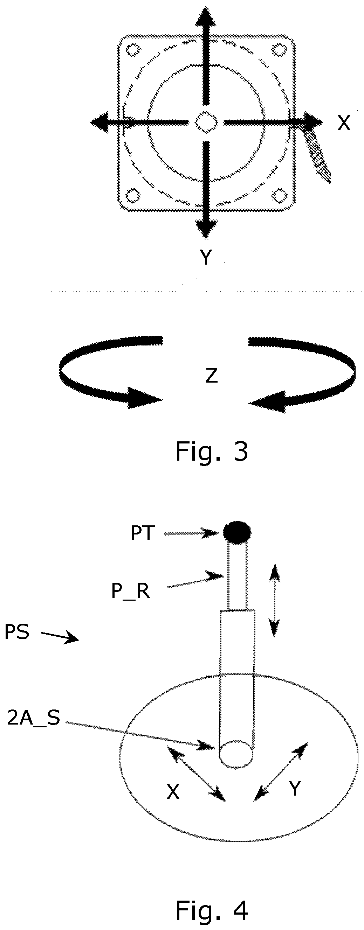

Fig. 3 illustrates operation of a preferred control element, namely a three-axis joystick, seen from above. The x and y axes controls the x or y position or x or y rotation of the robot, while the z axis position or orientation is controlled by rotation the joystick handle. In an alternative implementation, the z axis may be controlled by moving the joystick handle up and down. Preferably, the joysticks are designed to enter a neutral center position when no force is applied to it, and preferably the robot is designed to stop moving, when this neutral center position is sensed.

Fig. 4 shows a sketch of a probe sensor PS embodiment. Preferably, the length of the probe sensor PS should be designed to be similar, or at least approximately, to the desired process tool to be used on the robot in the working situation. The design is based on a two axes 2A_S joystick sensor with a linear movably or displaceable probe rod P_R mounted on it, and with a sensor (not visible) capable of sensing the linear displacement of the probe rod P_R, e.g. a linear potentiometer, thereby generating a signal indicative of length Z. Angle potentiometers (not visible) may be use to generate signals indicative of orientation, since these potentiometers can sense angles in two perpendicular directions X and Y, and thus reflect the tilting of the probe rod around the joint where it is connected to the base of the probe sensor.

All the axes preferably have spring designs, so the axis will center the position when no forces are applied on the probe sensor PS. The probe tip PT is preferably designed for the actual workpiece and therefore must be easily replaceable. E.g. the probe tip PT may be formed as a small ball to be able to easily slide on a surface.

Equation (1) describes the transformation defined in h∈{1,...,n} where n is the number of records. The transformation in equation is calculated by using the rotation and position part in a homogeneous coordinate description. Equation (2) describes the transformation from the robot base to the end of the last joint for the i'th transformation. This equation is input to the robot controller for moving the robot around the scene. Equation (3) describes the transformation from the robot base to the end of the probe sensor for the i'th transformation. During the learning process, the two transformations on the right side are recorded for calculating the desired path during execution described in equation (4):

$$_iT^{\text{Probe}}_{\text{6Joint}} \tag{1}$$

$$_iT^{\text{6Joint}}_{\text{Base}} \tag{2}$$

$$_iT^{\text{Probe}}_{\text{Base}} = {_iT^{\text{6Joint}}_{\text{Base}}} \; {_iT^{\text{Probe}}_{\text{6Joint}}} \tag{3}$$

$$_iT'^{\text{6Joint}}_{\text{Base}} = {_iT^{\text{6Joint}}_{\text{Base}}} \; {_iT^{\text{Probe}}_{\text{6Joint}}} \; {T^{\text{Tool}}_{\text{6Joint}}}^{-1} \tag{4}$$

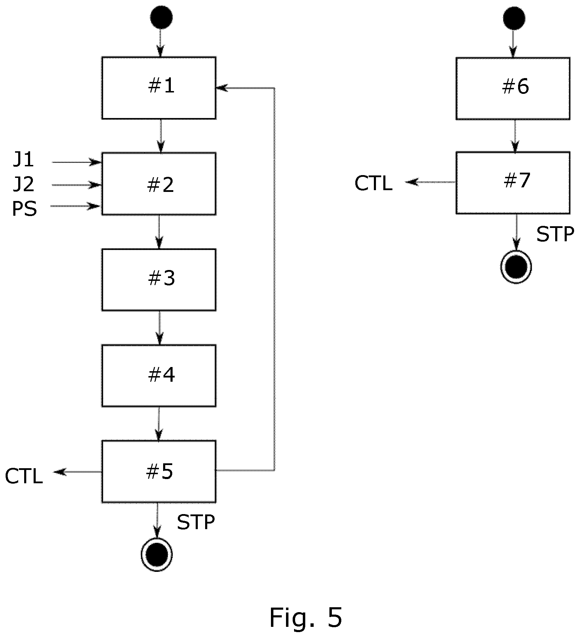

Fig. 5 shows examples of basic parts of the algorithm which can be implemented in software. The the left, a state diagram for the learning part is shown, and to the right, a state diagram for the execution part is shown, until (user) stop STP.

The learning part, to the left, comprises a main loop while the learning is active: #1: Loop start. #2: Read from analog to digital converter data from position joystick J1, rotation joystick J2, and probe sensor PS. #3: Calculate a transformation from the probe sensor PS equation (1) with a Feedback-Assisted algorithm to avoid outer mechanic limits for the probe sensor PS that adjusts the three probe sensor PS axes so they will be close to a center position during the learning process. Calculate transformations based thereon according to equations (1) and (2), and save them. #4: Determine probe sensor correction. #5: Calculates the new transformation from equation (2) with adjustment calculated in state #4, and send it to the robot controller CTL and return to state #1.

The execution part, to the right, comprises two states in a main loop until (user) stop STP. #6: Calculate equation (4) and send it to the robot controller CTL and return to state #6, as long as there is recorded transformation left.

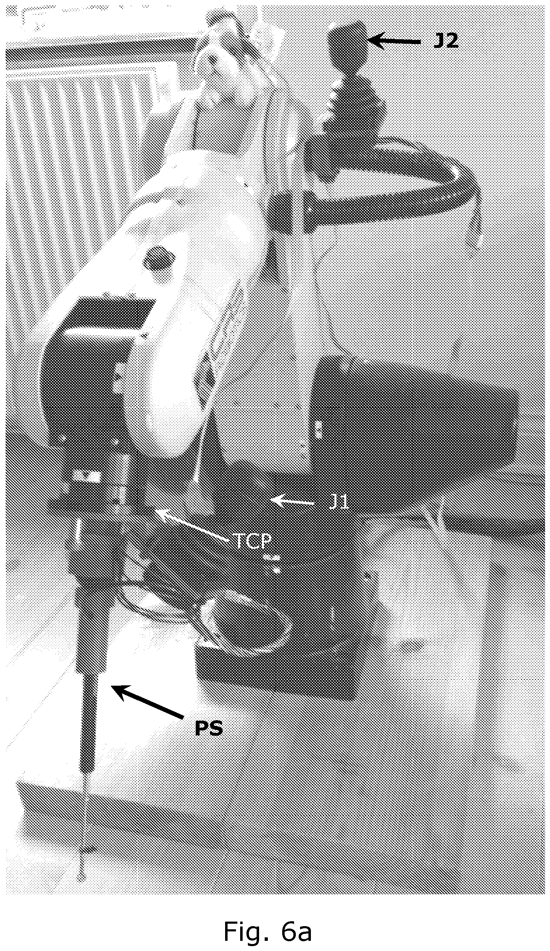

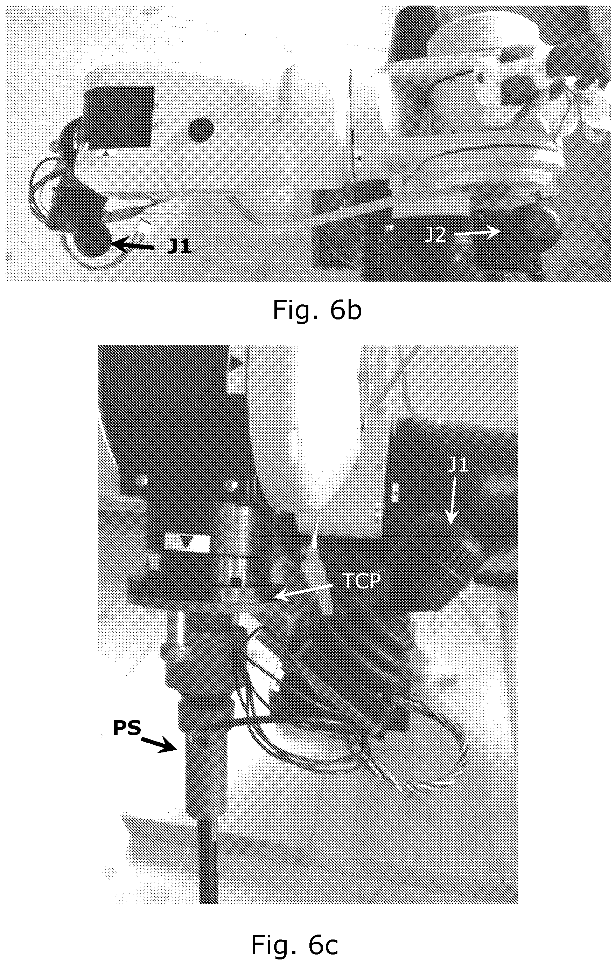

Fig. 6a, 6B, and 6c show photos of a prototype of an implementation of the invention on a CRS robot with two joysticks J1, J2, and a probe sensor PS mounted thereon. An A/D board is used for logging the analog signals from the joysticks J1, J2 and probe sensor PS into a separate computer with the regulation software running. However, as mentioned, a modern robot controller and program can directly log the data without the need for a separate computer.

A real-time learning session may begin with the robot being controlled to start with a tip of the probe sensor mounted on its TCP so as to start on one end of the desired trajectory to be followed. In a continuous real-time manner, the robot is then controlled to follow the trajectory by simultaneously controlling movement of position in space and orientation of the TCP by the user operating e.g. joysticks, and at the same time, the probe sensor provides input to the robot controller regarding distance and orientation deviation between a neutral position of the probe sensor tip and the actual position of the probe sensor tip. This is performed until the end E_T2 of the desired trajectory has been reached. During the controlling, a logging of data from the robot controller is performed with a suitable temporal and spatial precision in response to the user's operation of the user interface during the learning session. Finally, a calculation of a transformation is performed, so as to adapt the robot movement to a process tool with a given length, and this transformation calculation is performed in response to data logged from the probe sensor.

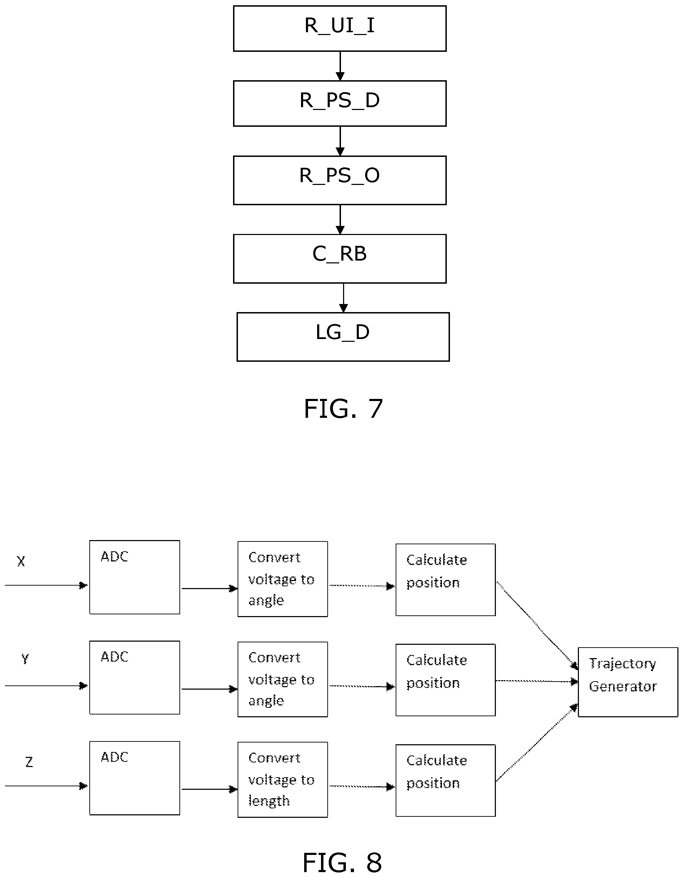

Fig. 7 illustrates steps of a method embodiment for controlling a robot during trajectory learning of the robot by demonstration from a user to make the robot follow a desired trajectory during a real-time learning session. The method comprising performing all of the following steps in a continuous manner simultaneously during the real-time learning session:

- receiving R_UI user input from at least a first control element for controlling movement of position in space of the robot by operation by the user during the real-time learning session, such as continuously receiving said input during the real-time learning sesssion,
- receiving R_PS_D distance input indicative of a distance from the TCP of the robot and a surface forming the trajectory to be followed during the real-time learning session, such as continuously receiving said distance input from a probe sensor,
- receiving R_PS_O orientation input indicative of an orientation of the TCP relative to the surface forming the trajectory to be followed during the real-time learning sesssion, such as continuously receiving said orientation input from a probe sensor,
- continuously controlling C_RB the robot in response to the user input received user input, the distance input and the orientation input, during the real-time learning session, and
- logging data LG_D in response to the user's operation of the at least first control element during the learning session, such as continuously logging said data at a predetermined sample rate, so as to allow later control of the robot in response to the data logged during the learning session.

This method can be programmed as a control algorithm to form part of a robot controller software package, or it can be fully or partly implemented as a dedicated computer device.

Fig. 8 shows the analog input from the sensor probe, where a potentiometer for each of X, Y which are angle potentiometers, and Z is a linear potentiometer. The signals are applied to analog-to-digital converters (ADCs). The digital number proportional to the magnitude of the voltage (e.g. 0 to 3.3/5 V interval), then used for calculating the actual angles (X, Y) and the length (Z). The probe needs to be calibrated for finding/calculating the relationship between voltage [V] and angle [radians]. The position is calculated in the last part of the diagram in Fig. 8, and used in the trajectory generator.

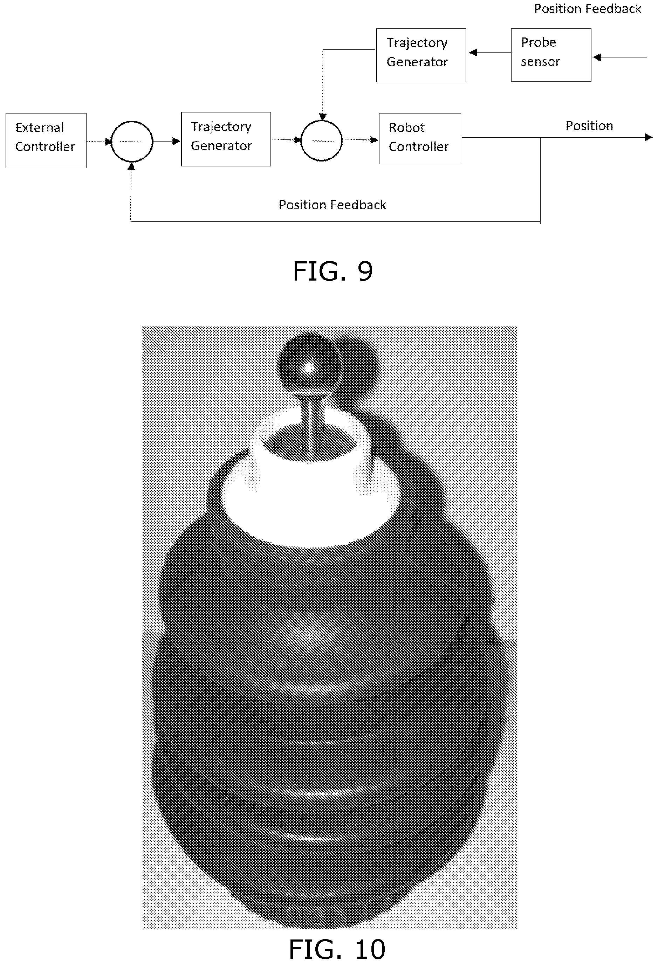

Fig. 9 shows a preferred control algorithm or system with the purpose of controlling position of the tool center point of the robot in response to position feedback from the probe sensor. This is preferably done, so that the robot will move its tool center point in response to the position feedback from the probe sensor, such that the probe sensor will be near its center position at least most of the time during a real-time learning session, irrespective of the user controlled movements of the robot. It is to be understood that a damping is preferred, so as to ensures smooth robot movements without any disturbing feedback effects on the user his/her control of the robot during the real-time learning session. E.g. such automatic robot motion towards the goal of the probe sensor being in its center position may be implemented such that the robot will only seek to obtain the center position of the probe sensor, when the user pauses, e.g. removes hands from the control elements, in the real-time learning session. At least the robot may only seek to obtain the center position of the probe sensor when the user controls the robot to perform movements slower that a certain preset threshold speed. This behavior during a real-time learning session will ensure that the user can more easily maneuver the tip of the probe sensor along a trajectory without unintendendly reachin the limits of the probe sensor, where it is no longer possible to keep the tip of the probe sensor at the preferred trajectory to be taught to the robot.

Each potentiometer (X, Y, Z) in the probe sensor has a center position defined, meaning that the two angle potentiometers (X, Y) will be in center position, and the linear potentiometer (Z) will be partly pressed in, e.g. half way pressed in between its two outer positions. During the real-time learning process, the trajectory generator will try to keep this center position for the probe sensor, and therefore the trajectory generator will add this to the rest of the control system. The Trajectory Generator measures the current probe sensor position and calculates a new relative robot position as output. The system will force the robot to move in a direction, so the next sensor position will be closer to the neutral or center position of the probe sensor. This behaving will avoid any exceed of the probe sensor position limits. Furthermore, this behaving will be the primary control loop and help the user controlling the robot during the real-time continuous trajectory learning session, where the system logs or records the positions and/or control signals at a predetermined sample rate throughout the learning session.

Fig. 10 shows a photo of a probe sensor embodiment with a spherically shaped tip (a small ball) arranged at an end of a rod, and a protective bellow. The rod is longitudinally displaceable so as to allow variation of distance between tip and base of the probe sensor. The base opposite the tip is arranged for mounting on the tool center point of the robot. The probe sensor has inside the protective bellow two angular potentiometers to sense respective X and Y angles, and one linear potentiometer to sense a length Z of the longitudinally displaceable rod. It may have analog outputs, or a circuit with ADCs to convert to a digital X, Y, Z output in a predetermined digital format at a sample frequency of such as 10-100 Hz, or another suitable sample frequency depending on the equipment used. Such circuit may be arranged inside the bellow in order to allow a digital output signal from the probe sensor.

To sum up: the invention provides a robot learning system for trajectory learning of a robot RB having a robot arm between a base and a tool center point TCP. A user interface allows the user to control the robot arm in order to follow a desired trajectory during a real-time. A probe sensor PS is mounted on the TCP during the learning session. The probe sensor PS measures a distance parameter Z indicative of distance from the TCP and a surface forming the trajectory to be followed, and an orientation parameter X, Y indicative of orientation of the TCP and the surface forming the trajectory to be followed. These distance and orientation data are provided as a feedback to the controller of the robot CTL during the real-time learning session, thereby allowing the robot controller software to assist the user in following a desired trajectory in a continuous manner. Especially, the probe sensor PS may have a displaceable tip TP to follow a surface and having a neutral or center position, and where the robot controller software controls the robot movements to seek the neutral or center position irrespective of the user's control inputs. Data DT is logged during the learning session, so as to allow later control of the robot RB in response to the data DT logged during the learning session.

Although the present invention has been described in connection with the specified embodiments, it should not be construed as being in any way limited to the presented examples. The scope of the present invention is to be interpreted in the light of the accompanying claim set. In the context of the claims, the terms "including" or "includes" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

Although the present invention has been described in connection with the specified embodiments, it should not be construed as being in any way limited to the presented examples. The scope of the present invention is to be interpreted in the light of the accompanying claim set. In the context of the claims, the terms "including" or "includes" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

**Claims**

1. A robot learning system for trajectory learning of an associated robot (RB) comprising a robot arm between a base and a tool center point (TCP), by demonstration from a user, the system comprising

   - a user interface arranged for connection to a controller of the robot (CTL), so as to allow the user to control the robot arm in order to follow a desired trajectory during a real-time learning session, wherein the user interface comprises at least a first control element (J1) for being operated by the user, and being arranged to control position in space of the tool center point (TCP) of the robot (RB),
   - a probe sensor (PS) arranged to be mounted on the tool center point (TCP) during the real-time learning session, wherein the probe sensor (PS) is arranged to measure a distance parameter (Z) indicative of distance from the tool center point (TCP) and a surface forming the trajectory to be followed and an orientation parameter (X, Y) indicative of orientation of the tool center point (TCP) and the surface forming the trajectory to be followed, and wherein the probe sensor (PS) is arranged to continuously generate one or more signals (PTL_IN) corresponding to said distance and orientation parameters (X, Y, Z), and wherein said one or more signals (PTL_IN) is provided as a feedback to the controller of the robot (CTL) during the real-time learning session, wherein the probe sensor (PS) comprises a longitudinally displaceable rod connected to a tip (PT) at one end and connected to a base of the probe sensor (PS) at the opposite end, so as to allow sensing of a distance Z1 between the base of the probe sensor (PS) and the tip (PT) by means of a distance sensor, such as a distance sensor comprising a linear potentiometer, and wherein the longitudinally displaceable rod and the base of the probe sensor (PS) are connected at a joint, so as to allow multidirectional movement of the longitudinally displaceable rod in relation to the base of the probe sensor (PS), wherein a first angle sensor, such as a potentiometer, is arranged to sense an angle between the base of the probe sensor (PS) and the displaceable rod, wherein the distance Z1 and the angle are used to adjust the distance and the orientation of the tool center point (TCP) so that the probe sensor (PS) is near a center position during the learning session, where the center position is a position that the probe sensor (PS) returns to when no forces are applied to the probe sensor (PS), and
   - a processor (CTL) arranged to log data (DT) in response to the user's operation of the at least first control element (J1) during the real-time learning session, such as continuously logging data (DT) at a predetermined sample rate, so as to allow later control of the robot (RB) in response to the data (DT) logged during the learning session.

2. Robot learning system according to claim 1, wherein the first angle sensor is arranged to sense an angle in a first direction (X) between the base of the probe sensor (PS) and the longitudinally displaceable rod, and wherein a second angle sensor, such as a potentiometer, is arranged to sense an angle in a second direction (Y) between the base of the probe sensor (PS) and the longitudinally displaceable rod, wherein said first and second directions (X, Y) are different, such as said first and second directions (X, Y) being perpendicular.

3. Robot learning system according to claim 1 or 2, wherein the probe sensor (PS) has a neutral or center position of its tip (PT) relative to its base.

4. Robot learning system according to claim 3, wherein the tip (PT) of the probe sensor (PS) is resiliently connected to its base, so that that the tip (PT) will return to the neutral or center position after being forced away from the neutral or center position.

5. Robot learning system according to any of the preceding claims, wherein the processor or robot controller (CTL) is programmed to continuously calculate a transformation of the robot coordinates in response to data representing said signal (PTL_IN) from the probe (PS) sensor during the real-time learning session.

6. Robot learning system according to claim 5, wherein the processor or robot controller (CTL) is programmed to control the robot in response to a combination of input from the user interface and data representing the signal (PTL_IN) from the probe sensor (PS), during the real-time learning session.

7. Robot learning system according to claim 6, wherein the robot controller (CTL) is programmed to move, such as continuously move, the robot (RB) in response to feedback from the probe sensor (PS), during the real-time learning session, so as to minimize a deviation between an actual position of the tip (PT) of the probe sensor (PS) and a neutral or center position of the tip (PT) of the probe sensor (PS).

8. Robot learning system according to claim 6 or 7, wherein the robot controller (CTL) is programmed to move, such as continuously move, the robot (RB) so as to help the user in continuously controlling the robot to ensure that the tip (PT) of the probe sensor (PS) is in contact with a surface of an object to be followed.

9. Robot learning system according to any of the preceding claims, wherein the user interface comprises a first control element (J1) comprising a first joystick (J1) arranged for operation by the user's one hand for control of position in space of the tool center point (TCP) of the robot (RB), wherein the user interface comprises a second control element (J2) element comprising a second joystick (J2) for tilting or rotating the tool center point (TCP) of the robot (RB), wherein the second joystick (J2) is arranged for simultaneous operation by the user's second hand, such as the first joystick (J1) being positioned at or near the tool center point (TCP) of the robot (RB).

10. Robot learning system according to any of the preceding claims, wherein the processor (CTL) is arranged to control the robot (RB) in response to the data (DT) logged during the learning session, and wherein the processor (CTL) is programmed to calculate a transformation of the robot coordinates in response to an input regarding physical properties, such as length, of a tool (PTL) to be mounted on the tool center point (TCP) during control of the robot (RB) in response to the data (DT) logged during the learning session, and further in response to known properties of the probe sensor (PS).

**Patentansprüche**

1. Roboterlernsystem zum Erlernen einer Bewegungsbahn eines verbundenen Roboters (RB), der einen Roboterarm zwischen einer Basis und einem Werkzeugmittelpunkt (TCP) umfasst, durch Demonstration von einem Benutzer, wobei das System Folgendes umfasst:

- eine Benutzerschnittstelle, die zur Verbindung mit einer Steuerung des Roboters (CTL) angeordnet ist, um dem Benutzer zu ermöglichen, den Roboterarm zu steuern, um während einer Lernsitzung in Echtzeit einer gewünschten Bewegungsbahn zu folgen, wobei die Benutzerschnittstelle zumindest ein erstes Steuerelement (J1) zur Betätigung durch den Benutzer umfasst und das angeordnet ist, um die räumliche Position des Werkzeugmittelpunktes (TCP) des Roboters (RB) zu steuern,
- einen Sondensensor (PS), der angeordnet ist, um während der Lernsitzung in Echtzeit an dem Werkzeugmittelpunkt (TCP) montiert zu werden, wobei der Sondensensor (PS) angeordnet ist, um einen Abstandsparameter (Z), der Abstand von dem Werkzeugmittelpunkt (TCP) und einer Fläche, die die zu folgende Bewegungsbahn bildet, und einen Ausrichtungsparameter (X, Y), der Ausrichtung des Werkzeugmittelpunktes (TCP) und der Fläche, die die zu folgende Bewegungsbahn bildet, zu messen, und wobei der Sondensensor (PS) angeordnet ist, um durchgehend ein oder mehrere Signale (PTL_IN) entsprechend dem Abstands- und Ausrichtungsparameter (X, Y, Z) zu erzeugen, und wobei das eine oder die mehreren Signale (PTL_IN) während der Lernsitzung in Echtzeit als Feedback an die Steuerung des Roboters (CTL) bereitgestellt werden, wobei der Sondensensor (PS) eine länglich verschiebbare Stange umfasst, die an einem Ende mit einer Spitze (PT) verbunden ist und an dem gegenüberliegenden Ende mit einer Basis des Sondensensors (PS) verbunden ist, um das Erfassen eines Abstands Z1 zwischen der Basis des Sondensensors (PS) und der Spitze (PT) mittels eines Abstandssensors zu ermöglichen, wie zum Beispiel eines Abstandssensors, der ein lineares Potentiometer umfasst, und wobei die länglich verschiebbare Stange und die Basis des Sondensensors (PS) an einem Gelenk verbunden sind, um multidirektionale Bewegung der länglich verschiebbaren Stange in Bezug auf die Basis des Sondensensors (PS) zu ermöglichen, wobei ein erster Winkelsensor, wie zum Beispiel ein Potentiometer, angeordnet ist, um einen Winkel zwischen der Basis des Sondensensors (PS) und der verschiebbaren Stange zu erfassen,

wobei der Abstand Z1 und der Winkel verwendet werden, um den Abstand und die Ausrichtung des Werkzeugmittelpunktes (TCP) anzupassen, sodass sich der Sondensensor (PS) während der Lernsitzung nahe einer mittigen Position befindet, wobei die mittige Position eine Position ist, in die der Sondensensor (PS) zurückkehrt, wenn keine Kräfte auf den Sondensensor (PS) ausgeübt werden, und
- einen Prozessor (CTL), der angeordnet ist, um Daten (DT) als Reaktion auf die Benutzerbetätigung des zumindest ersten Steuerelements (J1) während der Lernsitzung in Echtzeit zu protokollieren, wie zum Beispiel Daten (DT) durchgehend in einer zuvor festgelegten Abtastrate zu protokollieren, um spätere Steuerung des Roboters (RB) als Reaktion auf die während der Lernsitzung protokollierten Daten (DT) zu ermöglichen.

2. Roboterlernsystem nach Anspruch 1, wobei der erste Winkelsensor angeordnet ist, um einen Winkel in einer ersten Richtung (X) zwischen der Basis des Sondensensors (PS) und der länglich verschiebbaren Stange zu erfassen, und wobei ein zweiter Winkelsensor, wie zum Beispiel ein Potentiometer, angeordnet ist, um einen Winkel in einer zweiten Richtung (Y) zwischen der Basis des Sondensensors (PS) und der länglich verschiebbaren Stange zu erfassen, wobei sich die erste und die zweite Richtung (X, Y) unterscheiden, wie dass die erste und die zweite Richtung (X, Y) senkrecht zu einander sind.

3. Roboterlernsystem nach Anspruch 1 oder 2, wobei der Sondensensor (PS) eine neutrale oder mittige Position seiner Spitze (PT) relativ zu seiner Basis aufweist.

4. Roboterlernsystem nach Anspruch 3, wobei die Spitze (PT) des Sondensensors (PS) nachgiebig mit seiner Basis verbunden ist, sodass die Spitze (PT) in die neutrale oder mittige Position zurückkehrt, nachdem sie aus der neutralen oder mittigen Position weggedrängt wurde.

5. Roboterlernsystem nach einem der vorhergehenden Ansprüche, wobei der Prozessor oder die Robotersteuerung (CTL) programmiert ist, um während der Lernsitzung in Echtzeit als Reaktion auf Daten, die das Signal (PTL_IN) von dem Sondensensor (PS) darstellen, durchgehend eine Umwandlung der Roboterkoordinaten zu berechnen.

6. Roboterlernsystem nach Anspruch 5, wobei der Prozessor oder die Robotersteuerung (CTL) programmiert ist, um den Roboter als Reaktion auf eine Kombination aus Eingabe von der Benutzerschnittstelle und Daten, die das Signal (PTL_IN) von dem Sondensensor (PS) darstellen, während der Lernsitzung in Echtzeit zu steuern.

7. Roboterlernsystem nach Anspruch 6, wobei die Robotersteuerung (CTL) programmiert ist, um den Roboter (RB) als Reaktion auf Feedback von dem Sondensensor (PS) während der Lernsitzung in Echtzeit zu bewegen, wie zum Beispiel durchgehend zu bewegen, um eine Abweichung zwischen einer tatsächlichen Position der Spitze (PT) des Sondensensors (PS) und einer neutralen oder mittigen Position der Spitze (PT) des Sondensensors (PS) zu minimieren.

8. Roboterlernsystem nach Anspruch 6 oder 7, wobei die Robotersteuerung (CTL) programmiert ist, um den Roboter (RB) zu bewegen, wie zum Beispiel durchgehend zu bewegen, um dem Benutzer beim durchgehenden Steuern des Roboters zu helfen, um sicherzustellen, dass die Spitze (PT) des Sondensensors (PS) in Kontakt mit einer Oberfläche eines zu folgenden Objekts ist.

9. Roboterlernsystem nach einem der vorhergehenden Ansprüche, wobei die Benutzerschnittstelle ein erstes Steuerelement (J1) umfasst, das einen ersten Joystick (J1) umfasst, der für Betätigung durch eine Hand des Benutzers zur Steuerung der räumlichen Position des Werkzeugmittelpunktes (TCP) des Roboters (RB) angeordnet ist, wobei die Benutzerschnittstelle ein zweites Steuerelement (J2) umfasst, das einen zweiten Joystick (J2) zum Neigen oder Drehen des Werkzeugmittelpunktes (TCP) des Roboters (RB) umfasst, wobei der zweite Joystick (J2) für gleichzeitige Betätigung durch die zweite Hand des Benutzers angeordnet ist, wie dass der erste Joystick (J1) an oder nahe dem Werkzeugmittelpunkt (TCP) des Roboters (RB) positioniert ist.

10. Roboterlernsystem nach einem der vorhergehenden Ansprüche, wobei der Prozessor (CTL) angeordnet ist, um den Roboter (RB) als Reaktion auf die Daten (DT) zu steuern, die während der Lernsitzung protokolliert werden, und wobei der Prozessor (CTL) programmiert ist, um als Reaktion auf eine Eingabe in Bezug auf physische Eigenschaften, wie zum Beispiel Länge, eines Werkzeugs (PTL), das an dem Werkzeugmittelpunkt (TCP) zu montieren ist, während der Steuerung des Roboters (RB) als Reaktion auf die Daten (DT), die während der Lernsitzung protokolliert werden, und ferner als Reaktion auf bekannte Eigenschaften des Sondensensors (PS) eine Umwandlung der Roboterkoordinaten zu berechnen.

**Revendications**

1. Système d'apprentissage de robot pour l'apprentissage de trajectoire d'un robot associé (RB) comprenant un bras de robot entre une base et un point centre d'outil(TCP), par la démonstration d'un utilisateur, le système comprenant

   - une interface utilisateur agencée pour être raccordée à un dispositif de commande (CTL) du robot, de façon à permettre à l'utilisateur de commander le bras de robot afin de suivre une trajectoire souhaitée durant une session d'apprentissage en temps réel, ladite interface utilisateur comprenant au moins un premier élément de commande (J1) destiné à être actionné par l'utilisateur et agencé pour commander la position dans l'espace du point centre d'outil(TCP) du robot (RB),
   - un capteur de sonde (PS) agencé pour être monté sur le point centre d'outil(TCP) durant la session d'apprentissage en temps réel, ledit capteur de sonde (PS) étant agencé pour mesurer un paramètre de distance (Z) indiquant la distance entre le point centre d'outil(TCP) et une surface formant la trajectoire à suivre et un paramètre d'orientation (X, Y) indiquant l'orientation du point centre d'outil(TCP) et de la surface formant la trajectoire à suivre, et ledit capteur (PS) étant agencé pour générer en continu un ou plusieurs signaux (PTL_IN) correspondant auxdits paramètres de distance et d'orientation (X, Y, Z), et ledit ou lesdits signaux (PTL_IN) étant fournis en tant que rétroaction au dispositif de commande (CTL) du robot durant la session d'apprentissage en temps réel, ledit capteur de sonde (PS) comprenant une tige pouvant se déplacer longitudinalement raccordée à une pointe (PT) au niveau d'une extrémité et raccordée à une base du capteur de sonde (PS) au niveau de l'extrémité opposée, de façon à permettre la détection d'une distance Z1 entre le bas e du capteur de sonde (PS) et la pointe (PT) au moyen d'un capteur de distance, tel qu'un capteur de distance comprenant un potentiomètre linéaire, et ladite tige pouvant se déplacer longitudinalement et ladite base du capteur de sonde (PS) étant raccordées au niveau d'une articulation, de façon à permettre un mouvement multidirectionnel de la tige pouvant se déplacer longitudinalement par rapport à la base du capteur de sonde (PS), un premier capteur d'angle, tel qu'un potentiomètre, étant agencé pour détecter un angle entre la base du capteur de sonde (PS) et la tige pouvant se déplacer, ladite distance Z1 et ledit angle étant utilisés pour régler la distance et l'orientation du point centre d'outil(TCP) afin que le capteur de sonde (PS) se trouve à proximité d'une position centrale durant la session d'apprentissage, ladite position centrale étant une position au niveau de laquelle le capteur de sonde (PS) revient lorsqu'aucune force n'est appliquée au capteur de sonde (PS), et
   - un processeur (CTL) agencé pour enregistrer des données (DT) en réponse aux actions de l'utilisateur sur le premier élément de commande (J1) durant la session d'apprentissage en temps réel, tel que l'enregistrement en continu de données (DT) à une fréquence d'échantillonnage prédéterminée, de façon à permettre une commande ultérieure du robot (RB) en réponse aux données (DT) enregistrées durant la session d'apprentissage.

2. Système d'apprentissage de robot selon la revendication 1, ledit premier capteur d'angle étant agencé pour détecter un angle selon une première direction (X) entre la base du capteur de sonde (PS) et la tige pouvant se déplacer longitudinalement, et un second capteur d'angle, tel qu'un potentiomètre, étant agencé pour détecter un angle selon une seconde direction (Y) entre la base du capteur de sonde (PS) et la tige pouvant se déplacer longitudinalement, lesdites première et seconde directions (X, Y) étant différentes, telles que lesdites première et seconde directions (X, Y) sont perpendiculaires.

**3.** Système d'apprentissage de robot selon la revendication 1 ou 2, ledit capteur de sonde (PS) possédant une position de son extrémité (PT) qui est neutre ou centrale par rapport à sa base.

**4.** Système d'apprentissage de robot selon la revendication 3, ladite pointe (PT) du capteur de sonde (PS) étant raccordée de manière élastique à sa base, afin que la pointe (PT) revienne à la position neutre ou centrale après avoir été forcée à s'éloigner de la position neutre ou centrale.

**5.** Système d'apprentissage de robot selon l'une quelconque des revendications précédentes, ledit processeur ou ledit dispositif de commande (CTL) de robot étant programmé pour calculer en continu une transformation des coordonnées de robot en réponse à des données représentant ledit signal (PTL_IN) provenant du capteur de sonde (PS) durant la session d'apprentissage en temps réel.

**6.** Système d'apprentissage de robot selon la revendication 5, ledit processeur ou ledit dispositif de commande (CTL) de robot étant programmé pour commander le robot en réponse à une combinaison d'entrée provenant de l'interface utilisateur et de données représentant le signal (PTL_IN) provenant du capteur de sonde (PS), durant la session d'apprentissage en temps réel.

**7.** Système d'apprentissage de robot selon la revendication 6, ledit dispositif de commande (CTL) de robot étant programmé pour déplacer, tel qu'un déplacement en continu, le robot (RB) en réponse à une rétroaction provenant du capteur de sonde (PS), durant la session d'apprentissage en temps réel, de façon à minimiser un écart entre une position réelle de la pointe (PT) du capteur de sonde (PS) et une position neutre ou centrale de la pointe (PT) du capteur de sonde (PS).

**8.** Système d'apprentissage de robot selon la revendication 6 ou 7, ledit dispositif de commande (CTL) de robot étant programmé pour déplacer, tel qu'un déplacement en continu, le robot (RB) de façon à aider l'utilisateur à commander en continu le robot pour s'assurer que la pointe (PT) de la sonde (PS) est en contact avec une surface d'un objet à suivre.

**9.** Système d'apprentissage de robot selon l'une quelconque des revendications précédentes, ladite interface utilisateur comprenant un premier élément de commande (J1) comprenant un premier joystick (J1) agencé pour être actionné par une main de l'utilisateur pour la commande de la position dans l'espace du point centre d'outil(TCP) du robot (RB), ladite interface utilisateur comprenant un second élément de commande (J2) comprenant un second joystick (J2) pour incliner ou faire tourner le point centre d'outil(TCP) du robot (RB), ledit second joystick (J2) étant agencé pour un actionnement simultané par la seconde main de l'utilisateur, tel que le premier joystick (J1) est positionné au niveau ou à proximité du point centre d'outil(TCP) du robot (RB).

**10.** Système d'apprentissage de robot selon l'une quelconque des revendications précédentes, ledit processeur (CTL) étant agencé pour commander le robot (RB) en réponse aux données (DT) enregistrées durant la session d'apprentissage, et ledit processeur (CTL) étant programmé pour calculer une transformation des coordonnées de robot en réponse à une entrée concernant des propriétés physiques, telles que la longueur, d'un outil (PTL) à monter sur le point centre d'outil(TCP) durant la commande du robot (RB) en réponse aux données (DT) enregistrées durant la session d'apprentissage, et en outre en réponse aux propriétés connues du capteur de sonde (PS).

Fig. 1a

Fig. 1b

EP 3 380 902 B1

Fig. 2a

Fig. 2b

15

X

Y

Z

Fig. 3

PT

P_R

PS

2A_S

X

Y

Fig. 4

Fig. 5

Fig. 6a

Fig. 6b

Fig. 6c

R_UI_I

R_PS_D

R_PS_O

C_RB

LG_D

FIG. 7

X → ADC → Convert voltage to angle ⤍ Calculate position

Y → ADC → Convert voltage to angle ⤍ Calculate position

Z → ADC → Convert voltage to length ⤍ Calculate position

Trajectory Generator

FIG. 8

Position Feedback

```
                                      ┌──────────┐      ┌──────────┐
                                      │ Trajectory│◄─────│ Probe    │◄──────
                                      │ Generator │      │ sensor   │
                                      └──────────┘      └──────────┘
                                            :
┌──────────┐      ○      ┌──────────┐      ○      ┌──────────┐
│ External │─────►        │Trajectory │─────►      │ Robot    │────► Position
│ Controller│             │ Generator │            │Controller│
└──────────┘             └──────────┘            └──────────┘
            ▲
            └────────────── Position Feedback ──────────────┘
```

FIG. 9

FIG. 10

**EP 3 380 902 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6212443 B
- DE 202008014481 U1
- EP 2342608 A
- WO 2015090324 A1